# EUROPÄISCHE PATENTANMELDUNG

(11) **EP 3 141 339 A1**
(43) Veröffentlichungstag der Anmeldung: **15.03.2017**
(21) Anmeldenummer: 16188858.1
(22) Anmeldetag: 21.12.2011
(51) Int. Cl.: B23Q 11/10, F16L 27/093

(54) **DREHDURCHFÜHRUNG**

(30) Priorität: 21.12.2010 DE 102010055292
(62) Teilanmeldung aus: 11802945.3
(71) Anmelder: bielomatik Leuze GmbH + Co. KG, 72639 Neuffen (DE)
(72) Erfinder: HAAS, Reiner, 72555 Metzingen (DE)
(74) Vertreter: Hoeger, Stellrecht & Partner Patentanwälte mbB

(57) **Zusammenfassung**

Spindelkopf (1) für Werkzeugmaschinen, aufweisend ein Spindelgehäuse (2), einer gegenüber dem Spindelgehäuse (2) mit zumindest einem Lager (5) um eine Spindelachse drehbar gelagerten und eine Spindel (3) aufweisenden Arbeitsspindel (4), wobei das Spindelgehäuse (2), die Spindel (3) sowie die Arbeitsspindel (4) Zuführeinrichtungen (Z) für ein Kühlmedium für ein an einer Werkzeugseite (W) der Spindel (3) angeordnetes Werkzeug aufweist, dadurch gekennzeichnet, dass zwei eine Spaltdichtung im Bereich der Zuführeinrichtung (Z) bildende Buchsen (6, 7) vorgesehen sind, wobei die eine Buchse (6) in der Arbeitsspindel (4) und die andere Buchse (7) in dem Spindelgehäuse (2) angeordnet ist und zumindest eine der beiden Buchsen (6, 7) in ihrer zu der anderen Buchse (6, 7) weisenden Lauffläche zumindest eine Vertiefung (8) aufweist.

## Beschreibung

Die vorliegende Erfindung betrifft einen Spindelkopf für Werkzeugmaschinen mit einer Drehdurchführung für die Zufuhr eines Kühlmediums eines Werkzeuges gemäß den Merkmalen des jeweiligen Oberbegriffes der unabhängigen Patentansprüche.

Aus der EP 0 860 231 A1 ist ein Verfahren und eine Vorrichtung zum Zuführen einer Fluidmischung in ein drehendes Maschinenteil mit einer Drehdurchführung von einem stehenden in das drehende bzw. drehbare Maschinenteil bekannt, wobei die Fluidmischung zu einer von der Drehdurchführung entfernt gelegenen Stelle des drehenden Maschinenteiles geführt wird und die Fluidkomponenten durch die Drehdurchführung getrennt zugeführt werden und erst in der Nähe der eigentlichen Verbrauchsstelle die Mischung mit den gewünschten relativen Anteilen innerhalb des drehenden Maschinenteiles hergestellt wird. In diesem Stand der Technik ist also eine Drehdurchführung für die Zufuhr des Kühlmediums (Fluidmischung) beschrieben, wobei diese Drehdurchführung im Wesentlichen ein berührungsloses Überführungssystem besitzt. Dieses Überführungssystem hat eine radiale beidseitige Spaltdichtung, die die Abdichtung bei der Durchleitung von Luft zwischen einer drehenden Welle und einem stehenden Gehäuse übernimmt.

Aus der DE 198 15 134 A1 ist ein Spindelkopf für Werkzeugmaschinen bekannt, wobei ebenfalls eine Drehdurchführung für ein Kühlmedium vorhanden ist. Der Spindelkopf weist ein Spindelgehäuse auf, wobei in dem Spindelgehäuse eine Arbeitsspindel drehbar gelagert ist, die von einem Antrieb in die Drehbewegung versetzt wird. Die Arbeitsspindel ist mit zumindest einem Lager um eine Spindelachse in dem Spindelgehäuse gelagert. Aus der Arbeitsspindel ist eine längliche, rohrförmige Spindel herausgeführt, die auf ihrer einen Seite in der Arbeitsspindel angeordnet ist und auf deren anderer Seite (Werkzeugseite) ein vorzugsweise wechselbar ausgeführtes Werkzeug angeordnet ist. Über entsprechende Zuführeinrichtungen wird von außerhalb des Spindelgehäuses durch dieses und der Arbeitsspindel über die Spindel dem Werkzeug ein Kühlmedium zugeführt, um bei der Bearbeitung, insbesondere einer spanabhebenden Bearbeitung, eines Werkstückes mittels des Werkzeuges die dort entstehende Wärme und möglichst auch die abgetragenen Werkstückbestandteile abführen zu können.

Bei diesem Stand der Technik ist ein Buchsenpaar vorhanden, das zwischen der inneren und der äußeren Buchse einen kleinen radialen Spalt aufweist, wobei durch diesen Spalt eine Spaltdichtung für das Kühlmedium gebildet ist. Dabei ist die äußere Buchse feststehend, insbesondere in dem Spindelgehäuse, angeordnet, wobei die innere Buchse sich drehen kann und zu diesem Zweck insbesondere in der Arbeitsspindel fest angeordnet ist. Während des Betriebes eines solchen Spindelkopfes für Werkzeugmaschinen in der Praxis kommt es immer wieder vor, dass durch Fertigungsungenauigkeiten die Buchsen aneinanderschleifen und somit die einander zugewandten Laufflächen der beiden Buchsen entweder eine unzulässig hohe Temperatur annehmen oder im schlimmsten Fall festfressen. Dies kann auch dadurch geschehen, dass die Kugellager, mit denen die Arbeitsspindel in dem Spindelgehäuse drehbar gelagert ist, verschleißen und damit ein unzulässiges Spiel zwischen den beiden beteiligten Bauteilen annehmen. Durch dieses erhöhte Spiel kann es ebenfalls dazu kommen, dass die Buchsen schleifen und festfressen.

Außerdem ist es bei der Herstellung eines solchen Spindelkopfes für Werkzeugmaschinen von Nachteil, dass diese Buchsen als separate Bauteile gefertigt und bei der Montage in das Spindelgehäuse sowie die Arbeitsspindel eingebaut werden müssen. Dadurch erhöht sich die Teilevielfalt sowie der Montageaufwand. Außerdem kann es im ungünstigen Fall dazu kommen, dass die Buchsen, die immer gewisse Toleranzen aufweisen, sich einander addieren, so dass es infolge der Addition der Toleranzen ebenfalls sehr schnell zu einem Schleifen oder auch zu einem Festfressen der beiden Buchsen kommen kann.

Der Erfindung liegt daher die Aufgabe zugrunde, einen Spindelkopf für Werkzeugmaschinen dahingehend zu verbessern, dass die eingangs geschilderten Nachteile vermieden werden. Insbesondere soll beim Vorhandensein von eine Spaltdichtung im Bereich der Zuführeinrichtung bildende Buchsen ein Schleifen und Festfressen weitestgehend oder möglichst vollständig verhindert werden. Andererseits soll die Teilevielfalt sowie der Montageaufwand eines solchen Spindelkopfes deutlich reduziert werden.

Diese Aufgabe ist durch die beiden unabhängigen Patentansprüche gelöst.

Bei der ersten Lösung wird davon ausgegangen, dass der Spindelkopf nach wie vor eine Spaltdichtung bildendes Buchsenpaar aufweist.

In diesem Fall ist erfindungsgemäß vorgesehen, dass zwei eine Spaltdichtung im Bereich der Zuführeinrichtung bildende Buchsen vorgesehen sind, wobei die eine Buchse in der Arbeitsspindel und die andere Buchse in dem Spindelgehäuse angeordnet ist und zumindest eine der beiden Buchsen in ihrer zu der anderen Buchse weisenden Lauffläche zumindest eine Vertiefung aufweist. Durch eine solche Vertiefung wird in vorteilhafter Weise die mögliche Berührungsfläche zwischen den beiden einander zugewandten Laufflächen der Buchsen verkleinert und gleichzeitig in ebenfalls vorteilhafter Weise der Strömungswiderstand erhöht. So wird die Gefahr des Schleifens oder Festfressens der beiden einander zugewandten Laufflächen der Buchsen deutlich reduziert und gleichzeitig die Wirkung der Spaltdichtung verbessert. Außerdem kann sich in der zumindest einen Vertiefung Abrieb, der bei der Drehbewegung zwischen den beteiligten Bauteilen entsteht, sammeln, der dann nicht mehr, insbesondere im Lagerbereich, zu einem Verklemmen oder Festfressen führen kann. Außerdem wird durch die zumindest eine Vertiefung das Einlaufverhalten der einander zugewandten Laufflächen der beiden Buchsen deutlich verbessert. Diese vorstehend genannten Ausgestaltungen mit ihren Vorteilen werden durch die im Folgenden beschriebenen und in den Unteransprüchen angegebenen Merkmalen weiter gesteigert.

So ist in Weiterbildung der Erfindung vorgesehen, dass die Vertiefung als zumindest eine radial umlaufende Rille ausgebildet ist. Eine solche radial umlaufende Rille verkleinert ebenfalls die mögliche Berührungsfläche und erhöht gleichzeitig den Strömungswiderstand, wobei sie auch fertigungstechnisch sehr einfach herzustellen ist. So kann zum Beispiel eine gegossene Buchse durch ein spanabhebendes Drehverfahren mit einer solchen Rille versehen werden. Zur Steigerung dieses Effektes ist in Weiterbildung der Erfindung die Vertiefung als zumindest zwei parallel zueinander radial umlaufenden Rillen ausgebildet. Dadurch wird nochmals die mögliche Berührungsfläche verkleinert, bei gleichzeitig ausreichender Stützwirkung zwischen den beiden einander zugewandten Laufflächen der Buchsen. Die zumindest eine, vorzugsweise die zumindest zwei parallel zueinander radial verlaufenden Rillen haben in vorteilhafter Weise einen U- einen V- oder einen kombinierten Querschnitt. Die Tiefe der Rillen beträgt zwischen 0,1 und 0,2 mm (bei Betrachtung zwischen der Lauffläche der Buchse und dem Rillengrund) und weisen eine Breite (an der breitesten Stelle) ebenfalls zwischen 0,1 und 0,2 mm auf. Wenn mehr als drei parallel zueinander verlaufende Rillen vorhanden sind, weisen die einen gleichen oder voneinander unterschiedlichen Abstand zueinander auf. Alternativ zu zumindest einer radial umlaufenden Rille (auch als Nut zu bezeichnen) können andere Formen von Vertiefungen, die nicht zwangsweise radial umlaufend ausgebildet sein müssen, in Betracht kommen. Hier ist zum Beispiel an punkt- oder kraterförmige Vertiefungen, die über den Umfang der Oberfläche der Lauffläche verteilt sind, zu denken.

In Weiterbildung der Erfindung bestehen die Buchsen aus unterschiedlichem Material. Aufgrund der Wärmeausdehnung der Bauteile des Spindelkopfes der Werkzeugmaschine während des Betriebes, insbesondere der Arbeitsspindel und des Spindelgehäuses, kommt es zu einer Veränderung des Spaltes der Spaltdichtung, die durch die beiden Buchsen gebildet wird. Um hier zu vermeiden, dass sich der Spalt infolge der Wärmeausdehnung unzulässig verringert (was zu einer Reduzierung der Wirkung der Spaltdichtung und im schlimmsten Fall zu einem Schleifen oder Festfressen der Buchsen führen kann), werden in Abhängigkeit der bekannten Wärmedehnung der beteiligten Materialien des Spindeigehäuses und der Arbeitsspindel die Materialien der Buchsen unterschiedlich gewählt. Hier hat sich in vorteilhafter Weise herausgestellt, dass die eine Buchse aus einem nicht rostendem Stahlwerkstoff und die andere Buchse aus einer Kupferlegierung, insbesondere einer Kupfergusslegierung, oder umgekehrt, bestehen. Diese Werkstoffe sind grundsätzlich bekannt, lassen sich gut verarbeiten (insbesondere gießen und spanabhebend bearbeiten) und führen zu dem gewünschten Effekt. Von besonderem Vorteil ist die Materialpaarung aus dem nicht rostenden Stahlwerkstoff XCrNiS18-9 und der Kupfergusslegierung CuSn11 Pb2 (oder umgekehrt). Die Kupferlegierung bzw. die Kupfergusslegierung hat darüber hinaus noch den wesentlichen Vorteil, dass sie eine Notlaufeigenschaft für den Fall bietet, dass sich die beiden Laufflächen der Buchsen in unzulässiger Weise berühren, solange sich das Buchsenpaar noch nicht freigeschliffen hat.

In Weiterbildung der Erfindung ist vorgesehen, dass die Lauffläche zumindest einer der beiden Buchsen rau ausgebildet ist. Das bedeutet, dass die Lauffläche der einen Buchse glatt ausgebildet wird (zum Beispiel durch einen Honvorgang), während die Lauffläche der anderen Buchse gezielt mit einer Rauigkeit versehen wird. Besonders vorteilhaft ist für diesen Anwendungsfall, wenn die Rauigkeit einen Wert von 16 µm bis 25 µm Rz aufweist. Diese Rauigkeit begünstigt nämlich den Abrieb bei Berührung der einander zugewandten Laufflächen.

Der bis hierhin geschilderte Grundgedanke der Erfindung einschließlich seiner weiteren vorteilhaften Ausgestaltungen hat zudem noch den Vorteil, dass bisher schon gefertigte Spindelköpfe für Werkzeugmaschinen, die ein Buchsenpaar aufweisen, mit den erfindungsgemäß gestalteten Buchsen nachgerüstet werden können. Hierzu ist es lediglich erforderlich, die bisher eingesetzten Buchsenpaare aus dem Spindelkopf auszubauen und durch die erfindungsgemäß ausgestalteten neuen Buchsenpaare zu ersetzen.

Anstelle des Austausches von bisher vorhandenen Buchsenpaaren durch die erfindungsgemäß gestalteten Buchsenpaare ist als weitere Alternative zur Lösung der gestellten Aufgabe vorgesehen, dass die Buchsen weggelassen werden. Dies führt in vorteilhafter Weise zu einer Reduzierung der Teilezahl, des Montageaufwandes und der Kosten. Da es aber erforderlich ist, im Bereich der Zufuhr von Kühlmedium eine Spaltdichtung vorzusehen, wird diese erfindungsgemäß dadurch realisiert, dass die Spaltdichtung im Bereich der Zuführeinrichtung von der Arbeitsspindel und dem Spindelgehäuse gebildet ist. Das bedeutet, dass die Funktion der bisher vorhandenen Buchsen durch die beteiligten Bauteile des Spindelkopfes, nämlich der Arbeitsspindel und dem Spindelgehäuse, übernommen wird. Das bedeutet in vorteilhafter Weise, dass die Welle (Arbeitsspindel) und Gehäuse (Spindelgehäuse) die Funktion des bisherigen Buchsenpaares mit übernehmen. Dabei ist es in Weiterbildung der Erfindung vorgesehen, dass die Arbeitsspindel in ihrem axialen Verlauf, in dem sie in dem Spindelgehäuse drehbar gelagert ist, zumindest zwei unterschiedliche Durchmesser aufweist. Das bedeutet, dass die Welle mit Absetzen im Durchmesser gefertigt wird und das Gehäuse lediglich eine durchgehende Öffnung (insbesondere Bohrung) mit gleichbleibendem Innendurchmesser aufweist. Dadurch kann die Welle leichter mit höherer Genauigkeit, zum Beispiel durch spanabhebende Bearbeitung zwischen Spitzen einer Drehmaschine, sehr genau auch mit unterschiedlichen Durchmessern gefertigt werden. Weiterhin ist die Verwendung von Kugellagern mit einem kleinen Verhältnis zwischen der inneren Bohrung und dem äußeren Manteldurchmesser zu bevorzugen. Dadurch wird der Absatz im Wellendurchmesser kleiner und das Massenträgheitsmoment der Welle ist geringer. Aufgrund dieser hohen Genauigkeit kann der Spalt der Spaltdichtung kleiner, insbesondere ca. 0,02 mm, werden und die Spaltlänge (etwa 10 mm) bei gleicher Luftleckage gekürzt werden. Dies alles hat zum Vorteil, dass es zu einer weiteren Verkürzung der Drehdurchführung (DDF) kommt.

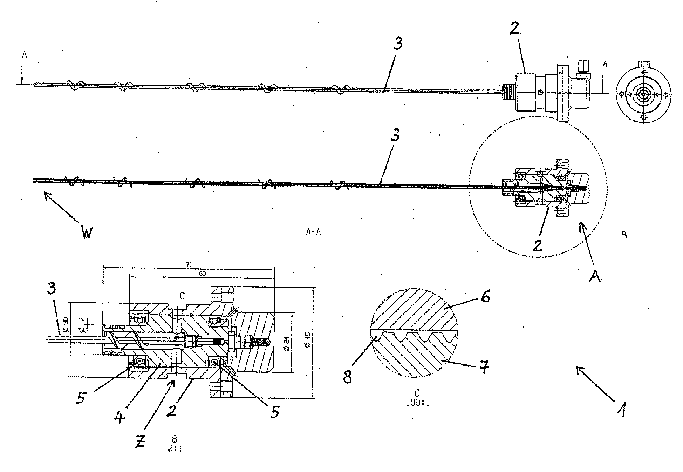

Ein Ausführungsbeispiel eines Spindelkopfes für Werkzeugmaschinen mit einem Buchsenpaar ist in den verschiedenen Ansichten in der einzigen Figur dargestellt.

Die einzelnen Ansichten in der einzigen Figur zeigen, soweit im Einzelnen dargestellt, einen Spindelkopf 1 einer Werkzeugmaschine. Hierbei sind jedoch nicht alle wesentlichen, sondern nur die für die Beschreibung der Erfindung wesentlichen Bauteile dargestellt. Bezüglich eines kompletten prinzipiellen Aufbaues eines solchen Spindelkopfes wird auf die beiden eingangs genannten Dokumente verwiesen.

Mit 1 ist ein Spindelkopf für eine Werkzeugmaschine bezeichnet, wobei in den beiden oberen Darstellungen der Spindelkopf 1 mit seinem Spindelgehäuse 2 einmal als Außenansicht (obere Darstellung) und einmal in Schnittdarstellung (darunterliegende Darstellung) dargestellt ist. Aus dem Spindelgehäuse 2, das feststehend in einer Werkzeugmaschine angeordnet ist, ist eine Spindel 3, die sich um ihre Längsachse dreht, herausgeführt. Der Spindelkopf 1 weist in an sich bekannter Weise eine Antriebsseite A und eine Werkzeugseite W auf. Auf der Werkzeugseite W ist ein hier nicht dargestelltes, vorzugsweise wechselbares Werkzeug zur Bearbeitung eines Werkstückes angeordnet. Das Werkzeug sowie die Spindel 3 sind in ebenfalls an sich bekannter Weise dazu ausgebildet, dass ein Kühlmedium, welches auf der Antriebsseite A dem Spindelkopf 1 zugeführt wird, in Richtung der Werkzeugseite W transportiert wird, so dass es Bearbeitungsbereiche zwischen dem Werkzeug und dem Werkstück die beteiligten Teile kühlen und abgetragene Werkstückreste entfernen kann. Dieses Kühlmedium, in vorteilhafter Weise eine Mischung aus einem flüssigen und einem gasförmigen Medium, wird in ebenfalls an sich bekannter Weise zugeführt, im Regelfall gemischt und auf die Werkzeugseite W transportiert.

In der unteren linken Darstellung der Figur ist der Spindelkopf 1 im Bereich des Spindelgehäuses 2 in vergrößerter Darstellung (B, 2:1) dargestellt. Die Bemaßungen, die in dieser Schnittdarstellung eingezeichnet sind, sind beispielhaft und mit der Maßeinheit "Millimeter" zu versehen.

In dieser vergrößerten linken unteren Darstellung ist erkennbar, dass aus dem feststehenden Spindelgehäuse 2 mit einem hier nicht dargestellten Antrieb die Spindel 3 aus einer in dem Spindelgehäuse 2 drehbar gelagerten Arbeitsspindel 4 herausgeführt ist. Die Arbeitsspindel 4, die angetrieben wird, ist über Lager 5, vorzugsweise Kugellager, in dem Spindelgehäuse 2 drehbar bewegend gelagert. Für die Zufuhr des Kühlmediums sind Zuführeinrichtungen Z vorgesehen, bei denen es sich beispielsweise um eine entsprechend geeignete und ausgeführte Öffnung in dem Spindelgehäuse 2, einem entsprechend geeigneten und ausgebildeten Kanal in der Arbeitsspindel 4 sowie einem spiralförmig auf der Spindel 3 angeordneten Vorschub (beispielsweise als archimedische Schraube ausgebildet) handelt. Zur Realisierung einer Spaltdichtung zwischen dem Spindelgehäuse 2 und der Antriebsspindel 4 im Bereich dieser Zuführeinrichtung Z ist ein Buchsenpaar vorgesehen, das eine erste Buchse 6 und eine zweite Buchse 7 umfasst. Dieses Buchsenpaar ist in der Figur in der unteren rechten Darstellung gezeigt. Die Buchse 6 ist dabei fest in der Arbeitsspindel 4 und die Buchse 7 fest in dem Spindelgehäuse 2 angeordnet. Dies kann beispielsweise durch eine Presspassung, ein Aufschrumpfen oder dergleichen erfolgen. Die beiden einander zugewandten Laufflächen der Buchsen 6, 7 bilden einen kleinen Spalt und sollen im Regelfall beim Betrieb des Spindelkopfes 1 während der Drehbewegung sich einander nicht berühren. Um zu vermeiden, dass es durch Fertigungsungenauigkeit und insbesondere durch einen Verschleiß der Lager 5 zu einem Schleifen oder Festfressen der Buchsen 6, 7 kommt, weisen die in erfindungsgemäßer Weise eine Vertiefung 8 auf. Diese Vertiefung 8 ist bevorzugt als zumindest eine radial umlaufende Rille (oder Nut) ausgebildet, wobei es von besonderem Vorteil ist, wenn mehrere radial umlaufende und parallel zueinander ausgerichtete Rillen vorhanden sind. Im Querschnitt betrachtet hat eine solche Rille einen U- oder einen V-förmigen Querschnitt, wobei auch wie in der Darstellung gezeigt eine Kombination von diesen beiden Querschnitten möglich ist. Die entsprechenden Bemaßungen, Materialpaarungen und Rauigkeiten sind schon weiter oben angegeben worden und finden bei diesem Ausführungsbeispiel ebenfalls Anwendung.

Während in dem Ausführungsbeispiel, das in der Figur dargestellt ist, ein Buchsenpaar 6, 7 vorhanden ist, kann der Spindelkopf 1 alternativ dazu so ausgestaltet sein, dass die Buchsen 6, 7 nicht vorhanden und dem entsprechend nicht eingebaut werden. Um im Bereich der Zuführeinrichtung Z in entsprechender Weise eine Spaltdichtung zu realisieren, ist dann vorgesehen, dass die Aufgabe und Funktion der Buchsen von dem Spindelgehäuse 2 und der Antriebsspindel 4 selber übernommen werden. Auch hier gilt, dass in diesem Bereich zumindest eine Vertiefung, vorzugsweise eine radial umlaufende Vertiefung, weiter vorzugsweise mehrere nebeneinander angeordnete radial umlaufende Vertiefungen, um den Bereich der Zuführeinrichtung Z herum angeordnet sind, um eine Spaltdichtung zu bilden. Auch hier kommen die vorstehend beschriebenen Materialpaarungen, Bemaßungen und Rauigkeiten in entsprechender Weise zur Anwendung.

### Bezugszeichenliste

- 1.: Spindelkopf
- 2.: Spindelgehäuse
- 3.: Spindel
- 4.: Arbeitsspindel
- 5.: Lager
- 6.: Buchse
- 7.: Buchse
- 8.: Vertiefung

- A: Antriebsseite
- W: Werkzeugseite
- Z: Zuführeinrichtung

## Patentansprüche

1. Spindelkopf (1) für Werkzeugmaschinen, aufweisend ein Spindelgehäuse (2), einer gegenüber dem Spindelgehäuse (2) mit zumindest einem Lager (5) um eine Spindelachse drehbar gelagerten und eine Spindel (3) aufweisenden Arbeitsspindel (4), wobei das Spindelgehäuse (2), die Spindel (3) sowie die Arbeitsspindel (4) Zuführeinrichtungen (Z) für ein Kühlmedium für ein an einer Werkzeugseite (W) der Spindel (3) angeordnetes Werkzeug aufweist, **dadurch gekennzeichnet, dass** zwei eine Spaltdichtung im Bereich der Zuführeinrichtung (Z) bildende Buchsen (6, 7) vorgesehen sind, wobei die eine Buchse (6) in der Arbeitsspindel (4) und die andere Buchse (7) in dem Spindelgehäuse (2) angeordnet ist und zumindest eine der beiden Buchsen (6, 7) in ihrer zu der anderen Buchse (6, 7) weisenden Lauffläche zumindest eine Vertiefung (8) aufweist, wobei die Buchsen (6, 7) aus unterschiedlichem Material bestehen und die eine Buchse (6) aus einem nichtrostenden Stahlwerkstoff und die andere Buchse (7) aus einer Kupferlegierung oder umgekehrt bestehen.

2. Spindelkopf (1) nach Anspruch 1, **dadurch gekennzeichnet, dass** die Vertiefung (8) als zumindest eine radial umlaufende Rille ausgebildet ist.

3. Spindelkopf (1) nach Anspruch 2, **dadurch gekennzeichnet, dass** die Vertiefung (8) als zumindest zwei parallel zueinander radial umlaufenden Rillen ausgebildet ist.

4. Spindelkopf (1) nach Anspruch 1, **dadurch gekennzeichnet, dass** die eine Buchse (6) aus dem nichtrostendem Stahlwerkstoff XCrNiS18-9 und die andere Buchse (7) aus der Kupfergusslegierung CuSn11Pb2 oder umgekehrt bestehen.

5. Spindelkopf (1) nach einem der vorhergehenden Ansprüche, **dadurch gekennzeichnet, dass** die Lauffläche zumindest einer der beiden Buchsen (6, 7) rau ausgebildet ist.

6. Spindelkopf (1) nach Anspruch 5, **dadurch gekennzeichnet, dass** die Rauigkeit einen Wert von 16 µm bis 25 µm Rz aufweist.
